# EUROPÄISCHE PATENTSCHRIFT

(11) **EP 0 556 937 B1**
(45) Veröffentlichungstag und Bekanntmachung des Hinweises auf die Patenterteilung: **22.10.1997**
(21) Anmeldenummer: 93250011.9
(22) Anmeldetag: 12.01.1993
(51) Int. Cl.: G02B 26/02, G02B 6/38

(54) **Optischer Schalter**
Optical switch
Interrupteur optique

(30) Priorität: 13.02.1992 DE 4204567
(43) Veröffentlichungstag der Anmeldung: 25.08.1993
(73) Patentinhaber: SIEMENS AKTIENGESELLSCHAFT, 80333 München (DE)
(72) Erfinder: Maczey, Christoph, Dipl.-Phys., W-1000 Berlin 27 (DE); Schulze, Joachim, Dipl.-Phys., W-1000 Berlin 41 (DE); Steckenborn, Arno, Dr., W-1000 Berlin 20 (DE)

(56) Entgegenhaltungen:
- EP-A- 459 776
- EP-A- 0 098 816
- EP-A- 0 298 260
- EP-A- 0 465 674
- WO-A-89/01641
- WO-A-90/04804
- WO-A-92/16861
- WO-A-92/16866
- PROCEEDINGS OF THE IEEE Bd. 70, Nr. 5, 5. Mai 1982, NEW YORK US K PETERSEN 'silicon as a mechanical material'

## Beschreibung

Bei einem aus der EP-A1-0 298 260 bekannten optischen Schalter ist auf einer Bodenplatte ein quaderförmiger Körper ortsfest angeordnet, der eine erste Plattform bildet. Auf dieser Plattform sind nebeneinander mehrere Lichtwellenleiterenden aufgeklebt, die bedarfsweise mit anderen Lichtwellenleiterenden zu koppeln sind. Dem ortsfesten Körper gegenüberliegend ist ein bewegbares Schaltstück angeordnet, das eine in der Ebene der ersten Plattform gelegene weitere Plattform aufweist, auf der die anderen Lichtwellenleiterenden aufgeklebt sind. Das Schaltstück ist in eine durch einen äußeren Anschlag definierte Schaltposition bringbar, in der sich die auf den Plattformen fixierten Lichtwellenleiterenden in gewünschter Paarung beabstandet gegenüberstehen. Um eine ausreichende Signalübertragung zwischen den gegenüberstehenden Lichtwellenleiterenden zu gewährleisten, darf ein maximaler Versatz (im µm-Bereich) nicht überschritten werden. Bei dem bekannten optischen Schalter ist daher eine präzise Justage des Anschlags erforderlich, die einen erheblichen Fertigungsaufwand bedingt.

Im Hinblick auf diese Problematik ist in der älteren, nicht vorveröffentlichten deutschen Patentanmeldung mit dem amtlichen Aktenzeichen P 41 09 196.5 ein optischer Schalter mit einer ortsfesten Siliziumplatte und mit einer relativ zu dieser bewegbaren Siliziumplatte beschrieben. Die beiden Siliziumplatten sind jeweils aus Teilen einer einzigen Ausgangsplatte (Siliziumwafer) durch einen gesteuerten Ätz- und Trennvorgang hergestellt, wobei jede Siliziumplatte V-Nuten zur Aufnahme von bedarfsweise zu koppelnden Lichtwellenleiterenden aufweist. Die Siliziumplatten weisen ferner zu einer der Längsflächen der V-Nuten parallele Referenzflächen auf, die durch chemisches Durchätzen durch die Ausgangsplatte (Siliziumwafer) nach vorhergehender entsprechender Maskierung hergestellt worden sind. Die Referenzflächen dienen unmittelbar als Anschlagflächen, die den relativen Schaltweg zwischen den Siliziumplatten zumindest in einer Richtung begrenzen. Aufgrund der anisotropen Ätztechnik und der Kristallgitterstruktur bei kristallinem Silizium ergeben sich jedoch verhältnismäßig große Abstände der als Anschlagflächen dienenden Referenzflächen und damit ein verhältnismäßig großer Schaltweg (im Bereich eines Millimeters bei einer Dicke des Siliziumwafers von ca. 0,5 mm). Der verhältnismäßig große Schaltweg wirkt sich z. B. auf die Baugröße und den Antriebsmechanismus für den optischen Schalter platz- und kostenerhöhend aus.

Demgegenüber ist aus der EP 459 776 A2 ein optischer Schalter für Lichtwellenleiter zu entnehmen, bei dem auf zwei relativ zueinander bewegbaren Schaltplatten jeweils parallele Lichtwellenleiterenden aufgebracht sind. Zur Begrenzung des Schaltweges der beiden Schaltplatten zueinander kommen Anschlagstifte zur Anwendung, die an den Schaltplatten fixiert sind, wobei die Anschlagstifte in eine geeignete Gegenlagerung der jeweils anderen Schaltplatte spielend eingreifen. Durch die Breite der Lagerungen und der Durchmesser der Anschlagstifte werden die Schaltwege bestimmt. Die Fixierung und Gegenlagerung der Anschlagstifte sowie die relative Ausrichtung der Schaltplatten zueinander wird durch eine Klemmvorrichtung erreicht. Eventuell vorhandene Maßfehler der Anschlagstifte und Lagerungen können durch die Klemmvorrichtung, welche für jeden Anschlagstift eine individuelle Justage vorsieht, nur unzureichend ausgeglichen werden. Dies kann Fehlanpassungen der zu schaltenden Lichtwellenleiter zur Folge haben. Daneben kann die Verwendung von zwei Anschlagstiften zu einer Überbestimmung der Anschlaglagen führen. Durch die Klemmvorrichtung und die stark ausgebildeten Schaltplatten sind für diesen Schalter ebenfalls große Antriebsmechanismen nötig. Über die Größe der Schaltwege sind aus der EP 459 776 keine Aussagen zu entnehmen.

Der Erfindung liegt daher die Aufgabe zugrunde, mit einfachen Mitteln einen optischen Schalter mit einer präzise definierten Schaltlage der beiden Siliziumplatten zueinander bei möglichst kleinem Schaltweg zu schaffen.

Diese Aufgabe wird erfindungsgemäß durch einen optischen Schalter mit den Merkmalen des Patentanspruchs 1 gelöst. Die Lichtwellenleiterenden können in vorteilhafter Weise in anisotrop in die Siliziumplatten geätzten V-Nuten aufgenommen sein; die Lichtwellenleiterenden können aber vorzugsweise auch durch auf die Siliziumplatte aufgebrachte Streifenwellenleiter gebildet sein, die eine sehr dichte Anordnung zulassen. Dadurch ergeben sich besonders kleine Schaltwege. Das Aufbringen derartiger Streifenwellenleiter ist beispielsweise in SPIE Vol. 1374, Integrated Optics and Optoelectronics II (1990) S. 118 ff. "Silica on Silicon Waveguide Components", E. McGoldrick oder in ELECTRONICS LETTERS, 21.7.1983, Vol. 19, No. 15, Seiten 583 und 584 beschrieben. Ein wesentlicher Vorteil des erfindungsgemäßen optischen Schalters besteht darin, daß annähernd beliebig kleine Schaltwege durch geeignete Wahl der Zwischenteilabmessungen und des Abstandes der Referenzflächen realisiert werden können. Durch die genaue Ausrichtung des Zwischenteils bezüglich der Referenzflächen ist ein fluchtender Verlauf der zu koppelnden Lichtwellenleiterenden gewährleistet. Insbesondere kann bei einem modularen Standardaufbau des Schalters durch jeweils entsprechend bemessene Zwischenteile eine Serie von Schaltern mit unterschiedlichen Schaltwegen realisiert werden.

Um eine besonders positionsgenaue Ausrichtung des Zwischenteils, insbesondere bei einer automatisierten Fertigung, zu gewährleisten, ist gemäß einer vorteilhaften Weiterbildung der Erfindung vorgesehen, daß die eine Siliziumplatte eine anisotrop geätzte, zu den V-Nuten parallel verlaufende Ausnehmung aufweist, die das Zwischenteil zusätzlich zu der Referenzfläche ausrichtet.

Es hat sich gezeigt, daß Fehlorientierungen in der Kristallstruktur der Ausgangsplatte (Siliziumwafer) zu asymmetrischen Nuten, Referenzflächen und Flanken der Ausnehmungen führen können, so daß infolge fehlerhafter Passungen ein flächiger Anschlag des Zwischenteils z. B. an der anderen Referenzfläche nicht mehr unbedingt gewährleistet ist. Im Hinblick auf diese Problematik ist gemäß einer vorteilhaften Ausgestaltung des erfindungsgemäßen optischen Schalters vorgesehen, daß das Zwischenteil aus derselben Ausgangsplatte durch anisotropes Ätzen hergestellt ist und daß das Zwischenteil eine Befestigungslage an der Siliziumplatte aufweist, die in bezug auf seine Lage relativ zu der Siliziumplatte in der Ausgangsplatte um 180° um eine zu den Längsachsen der Lichtwellenleiterenden parallele Achse gedreht ist. Das vorzugsweise nach dem gemeinsamen Ätzvorgang aus der Ausgangsplatte vereinzelte Zwischenteil weist damit ggf. gleiche Fehlorientierungen wie die Siliziumplatten, insbesondere wie deren Referenzflächen, auf. Durch die entsprechend um 180° gedrehte Einbaulage ist ein flächiger Anschlag auch bei Strukturfehlern in der Ausgangsplatte gewährleistet.

Eine hinsichtlich des konstruktiven Aufbaus und der Fertigungstechnik besonders vorteilhafte Ausbildung des erfindungsgemäßen optischen Schalters besteht darin, daß die Ausnehmung eine Nut ist und daß das Zwischenteil ein über die Referenzfläche der einen Siliziumplatte ragender Anschlagstift ist.

Gemäß einer vorteilhaften Fortbildung des erfindungsgemäßen optischen Schalters ist vorgesehen, daß auch die andere Siliziumplatte eine zu den V-Nuten parallel verlaufende Ausnehmung aufweist und daß diese Ausnehmung einen weiteren, in bezug auf eine Referenzfläche der einen Siliziumplatte ausgerichteten Anschlagstift aufnimmt, der mit dem Anschlagstift der einen Siliziumplatte schaltwegbegrenzend zusammenwirkt. Der Schaltweg ist damit durch den Mittenabstand der vorzugsweise als V-förmige Nuten ausgebildeten Ausnehmungen und der Anschlagstiftsdurchmesser vorgegeben; dabei sind kleine Fehlorientierungen in der Kristallstruktur der Ausgangsplatte und Ätztoleranzen ohne Einfluß.

Der erfindungsgemäße optische Schalter kann besonders vorteilhaft in einem optischen Lichtwellenleiter-Relais eingesetzt werden.

Nachfolgend werden Ausführungsbeispiele der Erfindung anhand einer Zeichnung stark vergrößert dargestellt und erläutert; es zeigen:
Figur 1 einen erfindungsgemäßen Schalter in schematischer Ansicht,
Figur 2 einen Schnitt durch den Schalter gemäß Figur 1,
Figuren 3A und 3B Fertigungsschritte bei der Herstellung des erfindungsgemäßen Schalters,
Figuren 4 und 5 eine zweite Ausführungsform des erfindungsgemäßen Schalters und
Figuren 6 und 7 eine dritte Ausführungsform des erfindungsgemäßen Schalters.

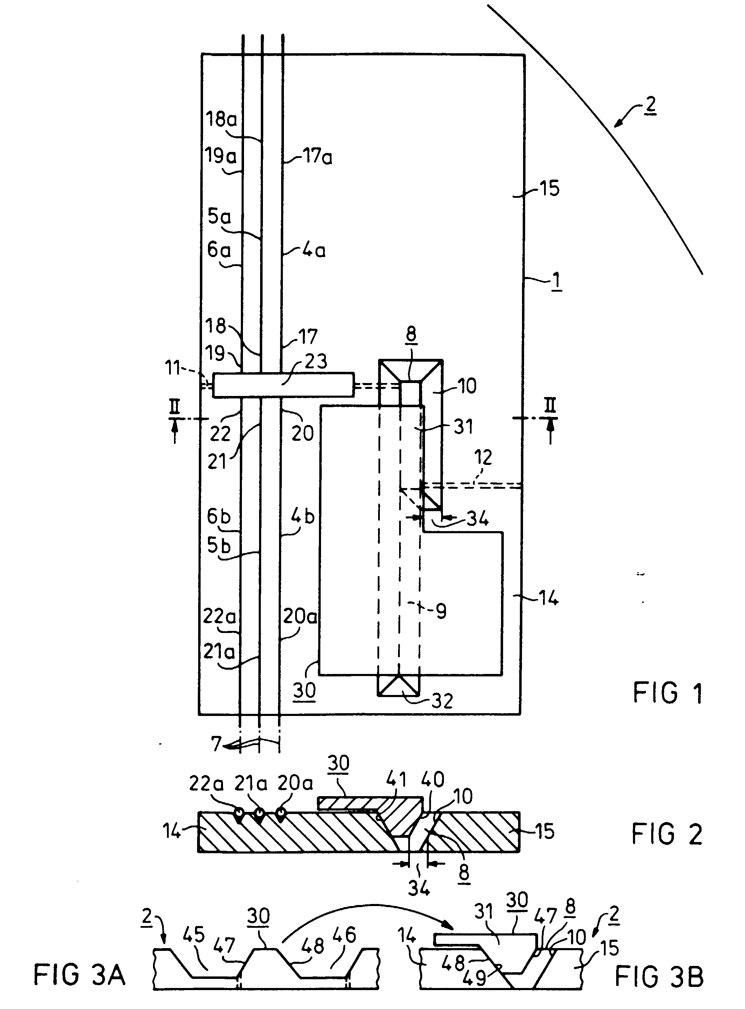

Figur 1 zeigt einen Ausschnitt 1 aus einer nur andeutungsweise dargestellten Ausgangsplatte 2 aus Siliziummaterial (Siliziumwafer). Die Ausgangsplatte 2 weist die Orientierung (100) auf (die Zahlen bedeuten die Miller'schen Indizes der Lage der Oberfläche innerhalb der Kristallstruktur). In solchen (100)Ausgangsplatten entstehen beim chemischen Ätzvorgang üblicherweise Begrenzungsflächen, die gegenüber der Ausgangsplattenoberfläche um einen Winkel von 54,74° geneigt sind. In einem Ätzvorgang mit einer geeigneten und nicht näher dargestellten Ätzmaske wurden drei V-förmige Nuten 4a, 4b; 5a, 5b und 6a, 6b auf der Oberfläche der Ausgangsplatte 2 erzeugt. Parallel zu den V-Nuten 4a bis 6b bzw. zu deren Längsachsen 7 wurde gleichzeitig durch anisotropes Durchätzen ein Fenster 8 mit Begrenzungsflächen gebildet. Eine Begrenzungsfläche verläuft parallel zu den Flankenflächen der V-Nuten 4a bis 6b und dient (versetzt) als weitergehende Referenzfläche 9 und direkt als Referenzfläche 10 zur Festlegung einer Schaltposition. Eine seitlich an dem Ausschnitt 1 beginnende Trennfuge 11 verläuft senkrecht zu den Längsachsen 7, mündet in das Fenster 8 und setzt sich vertikal versetzt als weitere Trennfuge 12 von dem Fenster 8 bis zur anderen Seite des Ausschnittes 1 fort. Auf diese Weise werden aus dem Ausschnitt 1 eine ortsfeste Siliziumplatte 14 und eine relativ zu dieser bewegbare Siliziumplatte 15 hergestellt.

Eine zur Vervollständigung des optischen Schalters vorgesehene Antriebseinrichtung zur bedarfsweisen Bewegung der bewegbaren Siliziumplatte 15 ist aus Darstellungsgründen in den Figuren fortgelassen. Der Antrieb der bewegbaren Siliziumplatte 15 kann beispielsweise über einen Stößel in einer in der älteren deutschen Patentanmeldung 41 09 196.5 angesprochenen Weise mit Hilfe einer elektromechanischen Vorrichtung erfolgen.

In die V-Nuten 4a, 5a und 6a der Siliziumplatte 15 sind Enden 17, 18 und 19 und in die V-Nuten 4b, 5b und 6b der Siliziumplatte 14 sind Enden 20, 21 und 22 von bedarfsweise zu koppelnden Lichtwellenleitern 17a bis 22a eingeklebt. Die Enden 17, 18 und 19 stehen den Enden 20, 21 und 22 in Abhängigkeit der Stellung der bewegbaren Siliziumplatte 15 unter Bildung von Kopplungspaaren oder teilweise versetzt in einem vorgegebenen Abstand 23 gegenüber.

Ein Zwischenteil 30 ragt mit seinem vorderen Bereich 31 schaltwegbegrenzend über die Referenzflächen 9 hinaus und steht der Referenzfläche 10 der anderen Siliziumplatte gegenüber. Die Siliziumplatte 14 weist eine anisotrop geätzte Ausnehmung 32 auf, deren eine Seite von der versetzten Referenzfläche 9 gebildet ist und in die eine schienenartige, im Querschnitt trapezförmige Erhöhung auf der der Siliziumplatte 14 zugewandten Seite des Zwischenteils 30 zusätzlich ausrichtend eingreift. Um einen Schaltweg 34 zwischen den Siliziumplatten 14 und 15 im Hinblick auf einen leistungsarmen und platzsparenden Antrieb möglichst gering auszubilden und auf die Abstände der Lichtwellenleiterenden 17...22 abzustimmen, ist auf der ersten Siliziumplatte 14 das Zwischenteil 30 z. B. durch Klebung in längsparalleler Ausrichtung bezüglich der Referenzflächen 9 und 10 befestigt.

Gemäß Figur 2 ist das Zwischenteil 30 mit seiner mit den Referenzflächen 9 und 10 zusammenwirkenden Wirkfläche 40 und einer Seitenfläche 41 parallel zu den Längsachsen 7 der V-Nuten 4a bis 6b in der Ausnehmung 32 ausgerichtet. Die Referenzfläche 10 und die Wirkfläche 40 bilden planparallele Anschlagflächen, die die Schaltposition bestimmen. Je nach Ausgestaltung des Versatzes zwischen den Referenzflächen 9 und 10 lassen sich so beliebige Schaltpositionen und geringe Schaltwege 34 realisieren.

Figur 3A zeigt, daß das Zwischenteil 30 aus derselben Ausgangsplatte 2 (Siliziumwafer) hergestellt ist, wie die nur teilweise im Bereich des Fensters 8 (Figur 3B) dargestellten Siliziumplatten 14 und 15. Nach Beendigung des Ätzvorganges ist das Fenster 8 mittels Durchätzung hergestellt, während an einer anderen Stelle der Ausgangsplatte 2 durch geringere Ätzung Ausnehmungen 45 und 46 in dem Siliziummaterial geschaffen sind.

Zwischen den Ausnehmungen 45 und 46 ist damit eine Erhöhung gebildet, die nach Drehung um 180° und entsprechender Positionierung auf der ortsfesten Siliziumplatte 14 (Figur 3B) als Endbereich 31 in Verlängerung der Referenzfläche 9 der Referenzfläche 10 gegenübersteht. Sollten Strukturfehler (Verkippung der Oberflächennormalen zur <100>-Orientierung) in dem Siliziummaterial auftreten, die z. B. zu einem ungleichen Winkel linksseitiger 47 und rechtsseitiger Flanken 48 (Figur 3A) führen, wird dieser Fehler aufgrund der 180°-Drehung kompensiert, so daß ein flächiger Kontakt zwischen der Flankenfläche 48 und der einen Längsfläche 49 der Ausnehmung 32 und ein flächiger Anschlag zwischen der Flankenfläche 47 (Wirkfläche 40 gemäß Figur 2) und der Referenzfläche 10 gewährleistet ist.

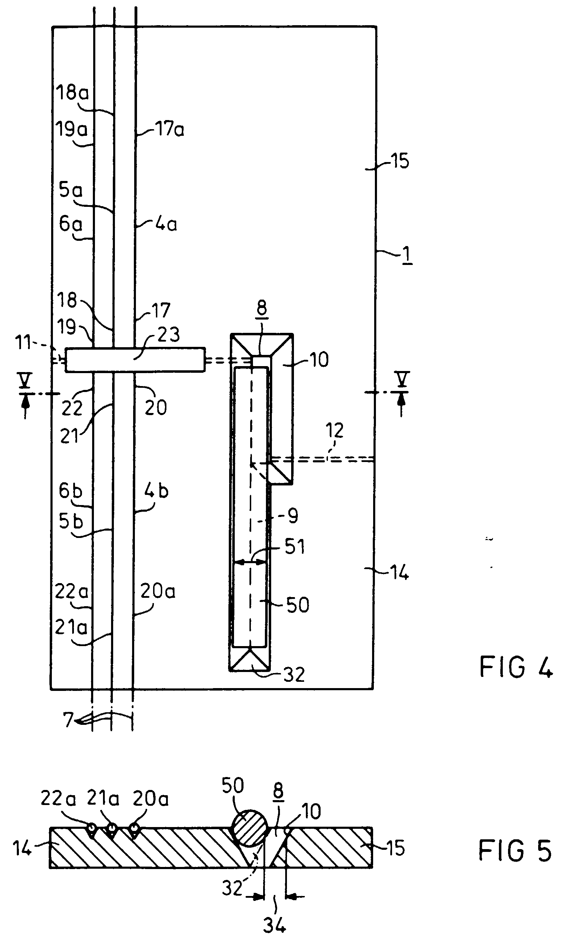

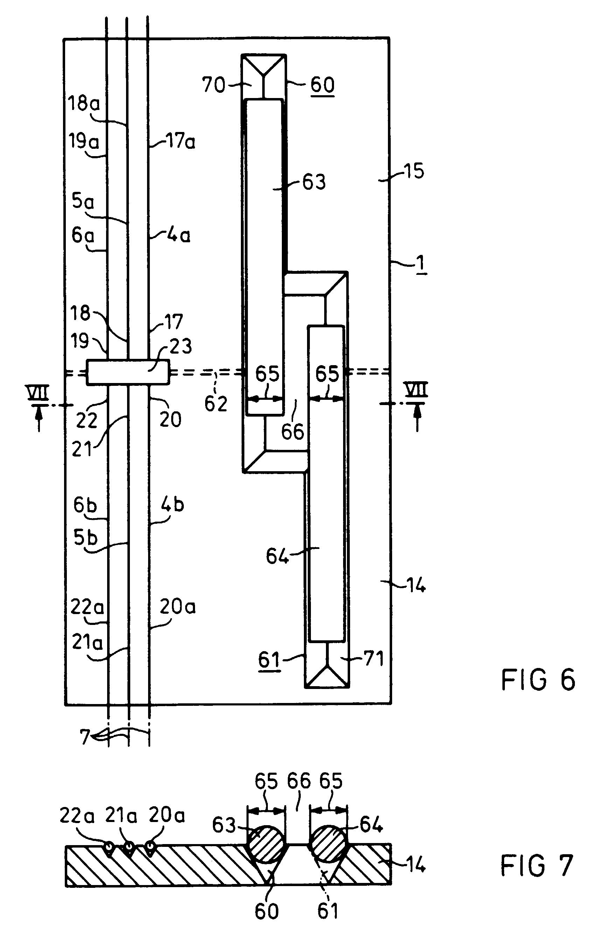

Bei einem in den Figuren 4 und 5 dargestellten zweiten Ausführungsbeispiel sind die bereits in Figur 1 dargestellten Elemente mit denselben Bezugszeichen versehen. In die als Längsnut ausgebildete Ausnehmung 32 ist ein bezüglich der Referenzflächen 9 und 10 ausgerichteter Anschlagstift 50 (Zylinderstift mit einem Durchmesser von beispielsweise 0,5 mm) eingebracht. Der Anschlagstift 50 ragt einendig über die Referenzfläche 9, so daß bei Bewegung der bewegbaren Siliziumplatte 15 der Schaltweg 34 durch den Versatz zwischen den Referenzflächen 9 und 10 bestimmt ist. In diesem Ausführungsbeispiel hat der Stiftdurchmesser 51 keinen Einfluß auf die Genauigkeit des Schaltweges 34.

Ein in den Figuren 6 und 7 dargestelltes drittes Ausführungsbeispiel eines optischen Schalters weist ein Fenster auf, dessen eine Begrenzungsfläche sich als Referenzfläche 70 nach oben als Flankenfläche einer weiteren Ausnehmung 60 in Form einer V-Nut fortsetzt, während eine gegenüberliegende Begrenzungsfläche sich als Referenzfläche 71 als Flankenfläche einer Ausnehmung 61 in Form einer senkrecht nach unten verlaufenden V-Nut fortsetzt. Bei dieser Ausgestaltung des Schalters verläuft eine den Ausschnitt 1 (vgl. Figur 1) in die beiden Siliziumplatten 14 und 15 unterteilende Trennfuge 62 waagerecht durch das Fenster. In die Ausnehmungen 60 und 61 sind jeweils Anschlagstifte 63 und 64 mit Durchmessern 65 von 0,5 mm eingeklebt. Die Längserstreckung der Anschlagstifte 63 und 64 ist aufgrund der gemeinsamen Ätzung der Ausnehmungen 60 und 61 mit den V-Nuten 4a bis 6b parallel zu deren Längsachsen 7. Auf diese Weise ist ein Schaltweg 66 durch die Durchmesser der Schaltstifte 63 und 64 und den jeweiligen Versatz der Ausnehmungen 60 und 61 bzw. der Referenzflächen 70 und 71 bestimmt (Figur 7).

Bei dem erfindungsgemäßen optischen Schalter werden die Lage und Ausrichtung des Zwischenteils bestimmenden Referenzflächen und Ausnehmungen vorzugsweise gleichzeitig mit dem Ätzen der V-Nuten zur Aufnahme der Lichtwellenleiterenden mit einer gemeinsamen Ätzmaske hergestellt, so daß eine ausgezeichnete Parallelität zwischen den zu koppelnden Lichtwellenleitern und den Referenzflächen und Ausnehmungen zur Erzielung eines hervorragenden schaltwegbegrenzenden Anschlags sichergestellt ist. Durch das oder die Zwischenteile (Zylinderstifte) werden die schaltwegdefinierenden Referenzflächen jeweils in den Bereich des Fensters 8 verlängert und entfalten dort ihre schaltwegbegrenzende Wirkung.

## Patentansprüche

1. Optischer Schalter
- mit einer ersten Siliziumplatte (14),
- mit einer relativ zu der ersten Siliziumplatte (14) bewegbaren zweiten Siliziumplatte (15),
wobei eine Stirnseite der ersten Platte einer Stirnseite der zweiten Platte gegenüberliegt,
wobei auf jeder der Platten an den Stirnseiten endende Lichtwellenleiterenden (17...22) parallel zueinander angeordnet sind,
wobei die beiden Platten (14, 15) aus derselben kristallinen Silizium-Ausgangsplatte (2) derart hergestellt sind, daß sie die gleiche Kristallorientierung bezüglich der Längsachsen der Lichtwellenleiterenden (17...22) aufweisen,
wobei jede der Platten (14, 15) eine durch anisotropes Ätzen gebildete, zu den Langsachsen der Lichtwellenleiterenden parallele Referenzfläche (9, 10) zur genauen Festlegung einer Schaltlage enthält und
wobei die Referenzflächen durch planparallele Kristallebenen gebildet sind, und
- mit mindestens einem Zwischenteil (30), das an einer (14) der Siliziumplatten befestigt ist, das an der zugehörigen Referenzfläche (9) ausgerichtet ist und zur Schaltbewegung darüber hinausragt und das der Referenzfläche (10) der anderen Siliziumplatte (15) gegenübersteht.

2. Optischer Schalter nach Anspruch 1, wobei
die beiden Siliziumplatten (14, 15) durch anisotropes Ätzen gebildete V-Nuten (4a...6b) zur Aufnahme der Lichtwellenleiterenden (17...22) aufweisen.

3. Optischer Schalter nach Anspruch 2, wobei
die eine Siliziumplatte (14) eine anisotrop geätzte, zu den V-Nuten (4a...6b) parallel verlaufende Ausnehmung (32) aufweist, die das Zwischenteil (30) zusätzlich zu der Referenzfläche (9) ausrichtet.

4. Optischer Schalter nach einem der Ansprüche 1 bis 3, wobei
das Zwischenteil (30) aus derselben Ausgangsplatte (2) durch anisotropes Ätzen hergestellt ist und daß das Zwischenteil (30) eine Befestigungslage an der Siliziumplatte (14) aufweist, die in bezug auf seine Lage relativ zu der Siliziumplatte (14) in der Ausgangsplatte (2) um 180° um eine zu den Längsachsen (7) der Lichtwellenleiterenden (17...22) parallele Achse gedreht ist.

5. Optischer Schalter nach Anspruch 3, wobei
die Ausnehmung (32) eine Nut ist und daß das Zwischenteil ein über die Referenzfläche (9) der einen Siliziumplatte (14) ragender Anschlagstift (50) ist.

6. Optischer Schalter nach Anspruch 5, wobei
auch die andere Siliziumplatte (15) eine zu den V-Nuten (4a...6b) parallel verlaufende Ausnehmung (60) aufweist und daß diese Ausnehmung (60) einen weiteren in bezug auf eine Referenzfläche (71) der einen Siliziumplatte (14) ausgerichteten Anschlagstift (63) aufnimmt, der mit dem Anschlagstift (64) der einen Siliziumplatte (14) schaltwegbegrenzend zusammenwirkt.

## Claims

1. Optical switch
- having a first silicon plate (14),
- having a second silicon plate (15) moveable relative to the first silicon plate (14),
whereby a front side of the first plate is opposite a front side of the second plate,
whereby on each of the plates optical waveguide ends (17...22) ending at the front sides are arranged parallel to each other,
whereby the two plates (14, 15) are made from the same crystalline silicon output plate (2) in such a way that they have the same crystal orientation with regard to the longitudinal axes of the optical waveguide ends (17...22),
whereby each of the plates (14, 15) includes a reference surface (9, 10) formed by means of anisotropic etching and parallel to the longitudinal axes of the optical waveguide ends, for the precise fixing of a switching position, and
whereby the reference surfaces are formed by plane-parallel crystal planes, and
- having at least one intermediate part (30) which is fastened to one (14) of the silicon plates, which intermediate part is aligned at the associated reference surface (9) and projects beyond it for the switching movement and which is opposite the reference surface (10) of the other silicon plate (15).

2. Optical switch according to claim 1, whereby the two silicon plates (14, 15) have V-grooves (4a...6b) formed by means of anisotropic etching to accommodate the optical waveguide ends (17...22).

3. Optical switch according to claim 2, whereby the one silicon plate (14) has a recess (32) etched in anisotropic manner and extending parallel to the V-grooves (4a,..6b), the recess aligning the intermediate part (30) in addition to the reference surface (9).

4. Optical switch according to one of claims 1 to 3, whereby the intermediate part (30) is made from the same output plate (2) by means of anisotropic etching and whereby the intermediate part (30) has a fastening position at the silicon plate (14) which with respect to its position relative to the silicon plate (14) in the output plate (2) is rotated by 180° about an axis parallel to the longitudinal axes (7) of the optical waveguide ends (17...22).

5. Optical switch according to claim 3, whereby the recess (32) is a groove and the intermediate part is a stop pin (50) projecting over the reference surface (9) of the one silicon plate (14).

6. Optical switch according to claim 5, whereby the other silicon plate (15) also has a recess (60) extending parallel to the V-grooves (4a ... 6b) and this recess (60) accommodates another stop pin (63) aligned with respect to a reference surface (71) of the one silicon plate (14), which stop pin cooperates with the stop pin (64) of the one silicon plate (14) so as to limit the contact travel.

## Revendications

1. Interrupteur optique comportant
- une première plaque de silicium (14),
- une deuxième plaque de silicium (15) mobile par rapport à la première plaque de silicium (14),
selon lequel un côté frontal de la première plaque fait face à un côté frontal de la deuxième plaque,
selon lequel des extrémités de guides d'ondes lumineuses (17 à 22) se terminant aux côtés frontaux sont agencées parallèlement les unes aux autres sur chacune des plaques,
selon lequel deux plaques (14, 15) sont fabriquées à partir de la même plaque de départ (2) cristalline en silicium de telle sorte qu'elles présentent la même orientation des monocristaux par rapport aux axes longitudinaux des extrémités de guides d'ondes lumineuses (17 à 22),
selon lequel chacune des plaques (14, 15) contient pour fixer précisément une position de commutation une surface de référence (9, 10) formée par attaque chimique anisotrope et parallèle aux axes longitudinaux des extrémités de guides d'ondes lumineuses et
selon lequel les surfaces de référence sont formées par des plans cristallins parallèles, et
- comportant au moins une partie intermédiaire (30), qui est fixée à une (14) des plaques de silicium, qui est orientée suivant la surface de référence (9) associée, qui dépasse de celle-ci pour le déplacement de commutation et qui fait face à la surface de référence (10) de l'autre plaque de silicium (15).

2. Interrupteur optique selon la revendication 1, selon lequel les deux plaques de silicium (14, 15) comportent des entailles en V (4a à 6b), formées par attaque chimique anisotrope, pour le logement des extrémités de guides d'ondes lumineuses (17 à 22).

3. Interrupteur optique selon la revendication 2, selon lequel la plaque de silicium (14) comporte un évidement (32) qui s'étend parallèlement aux entailles en V (4a à 6b) et qui oriente en plus la partie intermédiaire (30) suivant la surface de référence (9).

4. Interrupteur optique selon l'une des revendications 1 à 3, selon lequel la partie intermédiaire (30) est fabriquée à partir de la même plaque de départ (2) par attaque chimique anisotrope et selon lequel la partie intermédiaire (30) présente sur la plaque de silicium (14) une position de fixation qui est tournée, par rapport à sa position par rapport à la plaque de silicium (14) dans la plaque de départ (2), de 180ø autour d'un axe parallèle aux axes longitudinaux (7) des extrémités de guides d'ondes lumineuses (17 à 22).

5. Interrupteur optique selon la revendication 3, selon lequel le creux (32) est une entaille et selon lequel la partie intermédiaire est une tige de butée (50) qui dépasse de la surface de référence (9) de la plaque de silicium (14).

6. Interrupteur optique selon la revendication 5, selon lequel l'autre plaque de silicium (15) comporte aussi un évidement (60) s'étendant parallèlement aux entailles en V (4a à 6b) et selon lequel cet évidement (60) reçoit une autre tige de butée (63) qui est orientée suivant une surface de référence (71) de la plaque de silicium (14) et qui coopère avec la tige de butée (64) de la plaque de silicium (14) de manière à limiter le déplacement de commutation.
